# EUROPÄISCHE PATENTANMELDUNG

(11) **EP 1 621 374 A1**
(43) Veröffentlichungstag der Anmeldung: **01.02.2006**
(21) Anmeldenummer: 04103687.2
(22) Anmeldetag: 30.07.2004
(51) Int. Cl.: B60G 21/05

(54) **Verbundlenkerachse**

(71) Anmelder: Ford Global Technologies, LLC, A subsidary of Ford Motor Company, Dearborn, MI 48126 (US)
(72) Erfinder: Frantzen, Michael Johannes, 52076 Aachen (DE); Simon, Marc, 50735 Köln (DE)
(74) Vertreter: Drömer, Hans-Carsten

(57) **Zusammenfassung**

Die Erfindung betrifft eine Verbundlenkerachse (1) mit zwei Längslenkern (2), denen ein Verbindungselement (3) zugeordnet ist. Das Verbindungselement (3) ist starr ausgestaltet und ist mit zumindest einem Längslenker (2) derart über ein Koppelelement (4) verbunden, daß eine Wankbewegung eines Kraftfahrzeuges von dem Koppelelement (4) aufgenommen wird.

## Beschreibung

Die Erfindung betrifft eine Verbundlenkerachse mit zwei Längslenkern, denen ein Verbindungselement zugeordnet ist.

Die US 6,412,762 B2 betrifft ein Aufhängungsgelenk und eine Torsionsfederanordnung, die eine äußere rohrförmige Bewehrung, eine innere rohrförmige Bewehrung und eine Zwischen-Verbindungsmuffe aus einem Elastomer aufweist. Die Zwischen-Verbindungsmuffe ist fest und ohne Möglichkeit eine Gleitbewegung auszuführen an der äußeren und inneren Bewehrung befestigt. Die Verbindungsmuffe weist mindestens zwei Zellen auf, die sich längs ihres Umfangs erstrecken, wobei die Zellen derart ausgestaltet sind, daß sich der Elastomer frei verformen kann, so daß die radiale Federrate des Gelenks (radiale Gelenksteifigkeit) mindestens in bestimmten Richtungen beträchtlich verringert wird, ohne daß ihre Torsionsfederrate (Torsionssteifigkeit) beträchtlich verringert wird.

Die US 3,121,560 offenbart eine federnde Aufhängung für ein Fahrzeug mit einem Rahmen und einem Achs-Support und eine Antriebsverbindung, die den Achs-Support mit dem Rahmen verbindet. Die Antriebsverbindung weist erste und zweite komplementäre Elemente auf, von denen eines an dem Rahmen fixiert und das andere an dem Achs-Support fixiert ist. Das erste Element weist eine Muffe und das zweite Element einen starren Vorsprung auf, der bewegbar von der Muffe aufgenommen wird. Eine Manschette aus gummiähnlichem Material ist zwischen der Muffe und dem Vorsprung angeordnet, um Antriebskräfte zwischen beiden zu übertragen und um begrenzte Kippmomente zwischen beiden zur Verfügung zu stellen. Die gummiähnliche Manschette ist zwischen zwei koaxialen Metallhülsen befestigt. Eine Metallhülse ist an dem Vorsprung befestigt, wobei die andere verschiebbar in die Muffe eingreift, um eine axiale Bewegung zu ermöglichen. Es sind Mittel zur Aufhängung des Achs-Supports an dem Rahmen vorgesehen. Der Achs-Support weist zwei sich entgegengesetzt erstreckende, an jeweils entgegengesetzten Enden der Antriebsverbindung angeordnete, Hülsenelemente auf. Die Hülsenelemente sind zum Rahmen beabstandet und bezogen auf diesen benachbart. Gummiähnliche Puffer in den jeweiligen Hülsenelementen greifen im Belastungsfall in den Rahmen ein.

Die US 3,930,550 offenbart ein bereiftes Fahrzeug mit einem Boden bzw. Panzerboden. Bodenaufhängungsmittel weisen einen Straßenradtragarm auf, der mit dem Boden an einer Schwingachse verbunden ist. Es sind elastische Kraftabsorptionselemente vorgesehen, die innenseitig des Radträgerarms an der Schwingachse zentriert sind. Ein Torsionsstab verbindet den Radarm und das Kraftabsorptionselement. Der Torsionsstab erstreckt sich entlang der Schwingachse, so daß Straßenradkräfte zum Kraftabsorptionselement übertragen werden. Eine drehbare Antriebswelle ist im Boden auf einer Achse angeordnet, die die Schwingachse unterschneidet und kreuzt. Es sind Übertragungselemente vorgesehen, die die Antriebswelle wirksam mit dem Straßenrad verbinden. Der Torsionsstab weist eine lichte Öffnung durch diesen hindurch auf. Die Antriebswelle erstreckt sich durch die Öffnung ohne den Torsionsstab mit einer Drehbewegung, um die Schwingachse zu überlagern.

Bekannt ist, Verbundlenkeraufhängungen beispielsweise an Kleinkraftwagen einzusetzen. Entsprechend der Anforderungen an ein geringes Gewicht für diese und andere Kraftfahrzeugklassen sind die Anforderungen an ein geringes Gewicht für Aufhängungsbauteile genauso beachtenswert. Demgegenüber stiegen die Anforderungen der Wanksteifigkeit des Kraftfahrzeuges während der letzten Jahre an. Bekannte Verbundlenker bestehen aus zwei Längslenkern, wobei jeweils einer auf der linken bzw. rechten Fahrzeugseite angeordnet ist. Die beiden Längslenker sind jeweils mit ihrem vorderen Ende mit der Karosserie und mit ihrem hinteren Ende mit den Rädern verbunden. Zwischen beiden Längslenkern ist ein Torsionsbauteil angeordnet, das mit diesen formschlüssig verbunden, vorzugsweise verschweißt ist. Die Steifheit des Torsionsbauteils beeinflußt die Wanksteifigkeit der Aufhängung. Während der Wankbewegung des Kraftfahrzeuges wird das Torsionsprofil verdreht und verformt, wobei Dauerfestigkeitsprobleme auftreten, wenn die Torsionssteifigkeit sehr hoch ist. Daher ist die Torsionsrate dieser Art von Aufhängungen begrenzt, so daß eine Vielzahl von Verstärkungselementen zusätzlich vorgesehen werden müssen, um die Lebensdauer der Achsen mit hohen Torsionsraten aufrecht zu erhalten.

Der Erfindung liegt die Aufgabe zugrunde, eine Verbundlenkerachse der eingangs genannten Art mit einfachen Mitteln derart zu verbessern, daß die Erfordernisse an ein geringes Gewicht der Verbundlenkerachse eingehalten werden, wobei gleichzeitig eine genügende Torsionssteifigkeit gewährleistet ist.

Erfindungsgemäß wird die Aufgabe dadurch gelöst, daß das Verbindungselement starr ausgestaltet ist, wobei das Verbindungselement mit zumindest einem Längslenker derart über ein Koppelelement verbunden ist, daß eine Wankbewegung eines Kraftfahrzeuges von den Koppelelementen aufgenommen wird.

Mit der erfindungsgemäßen Lösung ist das Verbindungselement als ein einfaches, starres Bauteil ausgestaltet. Günstig im Sinne der Erfindung ist, wenn das Verbindungselement als im Querschnitt gesehen hohles, rundes Rohr ausgestaltet ist, wobei das Verbindungselement zweckmäßigerweise aber auch als im Querschnitt gesehen hohles Vierkantprofil ausgestaltet sein kann.

Um eine Bewegung zu ermöglichen, die für eine Wankbewegung des Kraftfahrzeugs erforderlich ist, ist das Koppelelement vorteilhaft als elastische Buchse, vorzugsweise als Gummibuchse ausgestaltet. Hierbei wird die Bewegung des Kraftfahrzeuges von dem Koppelelement aufgenommen, so daß Dauerfestigkeitsprobleme der Metallteile vermieden werden. Hierdurch kann das Gewicht der Metallteile erheblich reduziert werden. Eine Einstellung der Wanksteifigkeit ist daher auch wesentlich leichter, da die Metallteile weiterhin verwendet werden können, wobei lediglich die Koppelelemente mit entsprechenden Eigenschaften eingesetzt werden müssen.

Zur Verbindung des Längslenkers mit dem Verbindungselement ist es günstig im Sinne der Erfindung, wenn der Längslenker eine Öffnung zur Aufnahme des Koppelelementes aufweist, wobei das Verbindungselement in einer zentralen Öffnung des Koppelelementes aufgenommen ist.

In einer Ausgestaltung der Erfindung ist zweckmäßig vorgesehen, daß das Verbindungselement eine Aufnahmeöffnung zur Aufnahme des Koppelelementes aufweist, wobei der Längslenker in einer zentralen Öffnung des Koppelelementes aufgenommen ist.

Weitere vorteilhafte Ausgestaltungen der Erfindung sind in den Unteransprüchen und der folgenden Figurenbeschreibung offenbart. Es zeigen:
- Fig. 1: Eine perspektivische Gesamtansicht einer Verbundlenkerachse, mit einem Koppelelement,
- Fig. 2: die Verbundlenkerachse aus Figur 1 mit zwei Koppelelementen,
- Fig. 3: eine Verbundlenkerachse in einer weiteren Ausgestaltung,
- Fig. 4: eine Verbundlenkerachse in einer weiteren Ausgestaltung,
- Fig. 5: die Verbundlenkerachse aus Figur 4 mit einem im Wesentlichen U-förmigen Verbindungselement.

In den unterschiedlichen Figuren sind gleiche Teile stets mit denselben Bezugszeichen versehen, so daß diese in der Regel auch nur einmal beschrieben werden.

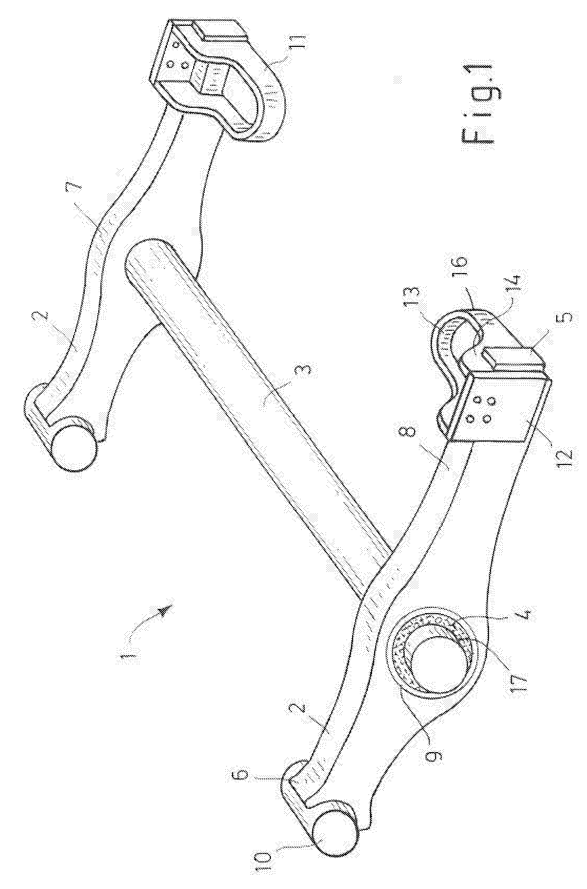

Figur 1 zeigt eine Verbundlenkerachse 1 mit zwei Längslenkern 2, denen ein Verbindungselement 3 zugeordnet ist. Die dargestellte Verbundlenkerachse 1 ist beispielsweise in Kleinkraftwagen einsetzbar.

Das Verbindungselement 3 ist als starres Bauteil ausgestaltet und mit zumindest einem Längslenker 2 derart über ein Koppelelement 4 verbunden, daß eine Wankbewegung des Kleinkraftwagens von dem Koppelelement 4 aufgenommen wird.

Die jeweiligen Längslenker 2 weisen ein Radbefestigungsende 5 und ein dazu gegenüberliegend angeordnetes Karosseriebefestigungsende 6 auf. Die Längslenker 2 sind jeweils identisch ausgestaltet, so daß nachfolgend jeweils lediglich ein Längslenker 2 beschrieben wird.

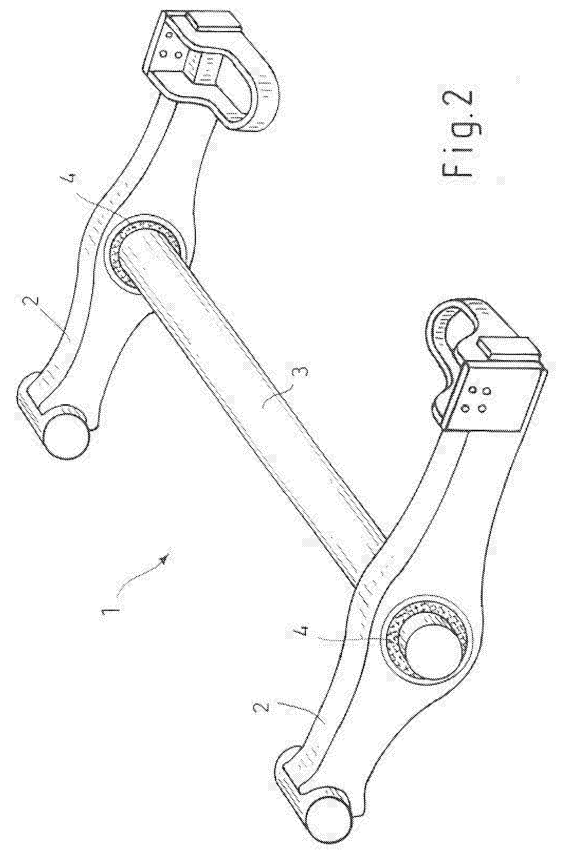

Der Längslenker 2 gemäß den Figuren 1 und 2 weist einen mittleren Aufnahmebereich 7 auf, an dem zum jeweiligen Befestigungsende 5, 6 Fortsätze 8 angeordnet sind. Bezogen auf die Fortsätze 8 ist der mittlere Aufnahmebereich 7 mit einer Verdickung ausgestaltet.

In dem mittleren Aufnahmebereich 7 ist eine Öffnung 9 eingebracht. Die Öffnung 9 ist derart ausgestaltet, daß das Koppelelement 4 von der Öffnung 9 hinreichend lagesicher aufgenommen wird.

An dem Radbefestigungsende 5 des Längslenkers 2 ist ein Radbefestigungselement 11 angeordnet. Das Radbefestigungselement 11 weist eine Platte 12 zur Befestigung des Rades sowie ein an der Platte 12 angeordnetes Federwiderlager 13 auf. Das Federwiderlager 13 weist einen im Querschnitt gesehen S-förmigen Schenkel 14 auf, der in einen Lagerbereich 16 übergeht. Der S-förmige Schenkel 14 ist einendig mit der Platte 12 verbunden, so daß das Radbefestigungselement 11 auf das Radbefestigungsende 5 aufsteckbar ist und formschlüssig mit dem Längslenker 2 verbunden, beispielsweise verschweißt ist.

An dem Karosseriebefestigungsende 6 ist der Längslenker 2 mit der Karosserie über ein Koppelelement 10 verbunden, wobei das Karosseriebefestigungsende 6 eine rohrförmige Aufnahme aufweist.

Das Koppelelement 4 weist eine zentrale Öffnung 17 zur Aufnahme des Verbindungselementes 3 auf. Das Verbindungselement 3 ist in den Figuren 1 und 2 als im Querschnitt gesehen hohles, rundes Rohr ausgestaltet.

In Figur 1 ist lediglich ein Koppelelement 4 in einem der Längslenker 2 angeordnet. Mit dem anderen Längslenker 2 ist das Verbindungselement 3 formschlüssig verbunden, vorzugsweise verschweißt. Im Unterschied dazu ist in Figur 2 in beiden Längslenkern 2 jeweils ein Koppelelement 4 angeordnet, die in ihrer zentralen Öffnung 17 jeweils das Verbindungselement 3 aufnehmen.

Bei der erfindungsgemäßen Ausgestaltung werden Wankbewegungen des Kraftfahrzeuges, die beispielsweise bei Kurvenfahrten auftreten, von den Koppelelementen 4 bzw. dem Koppelelement 4, das als elastische Buchse, vorzugsweise als Gummibuchse ausgestaltet ist, aufgenommen. Die Wankbewegungen werden nicht von dem Längslenker 2 bzw. dem Verbindungselement 3, welches Metallteile sind, aufgenommen. Damit treten an den Metallteilen auch keine Dauerfestigkeitsprobleme mehr auf, wodurch das Gewicht der Metallteile erheblich reduziert werden kann. Bei einer Einstellung der Wanksteifigkeit können die jeweils vorhandenen Metallteile verwendet werden, wobei lediglich unterschiedliche Koppelelemente 4 mit den geforderten Eigenschaften eingesetzt werden müssen.

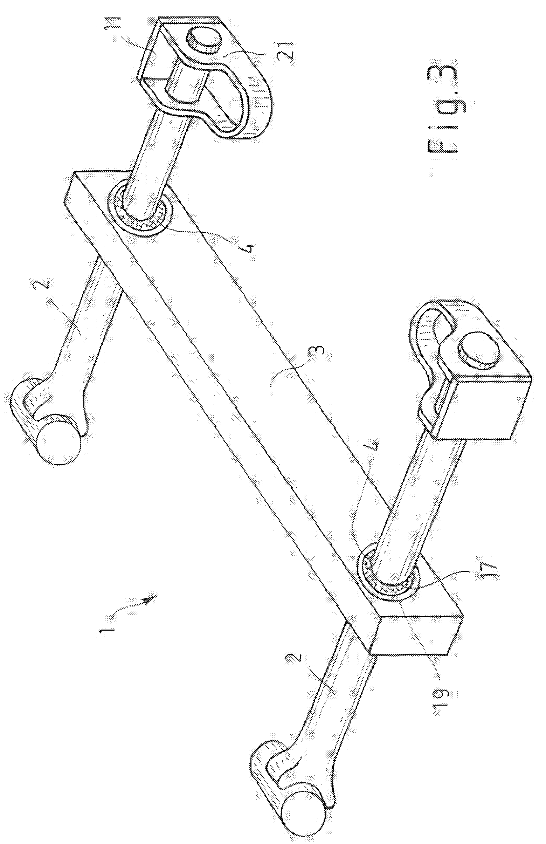

Figur 3 zeigt die Verbundlenkerachse 1 in einer vorteilhaften Ausgestaltung. Das Verbindungselement 3 ist in dem in Figur 3 dargestellten Ausführungsbeispiel als im Querschnitt gesehen hohles Vierkantprofil ausgestaltet. Das Verbindungselement 3 weist an seinen jeweiligen Endbereichen eine Aufnahmeöffnung 19 zur Aufnahme des Koppelelementes 4 auf. Der Längslenker 2 ist jeweils in der zentralen Öffnung 17 des Koppelelementes 4 aufgenommen. Die Längslenker 2 sind in dem in Figur 3 dargestellten Ausführungsbeispiel als im Querschnitt gesehen durchgehend rundes Rohr ausgestaltet. Von daher sind auch die Radbefestigungselemente 11 zur Befestigung an dem Längslenker 2 entsprechend ausgestaltet, indem diese Seitenbleche 21 aufweisen, die eine Bohrung haben, durch die der jeweilige Längslenker 2 mit seinem Radbefestigungsende 5 durchsteckbar ist. Zur Befestigung des Radbefestigungselementes 11 kann wiederum eine formschlüssige Verbindung, beispielsweise eine Schweißverbindung, vorgesehen sein.

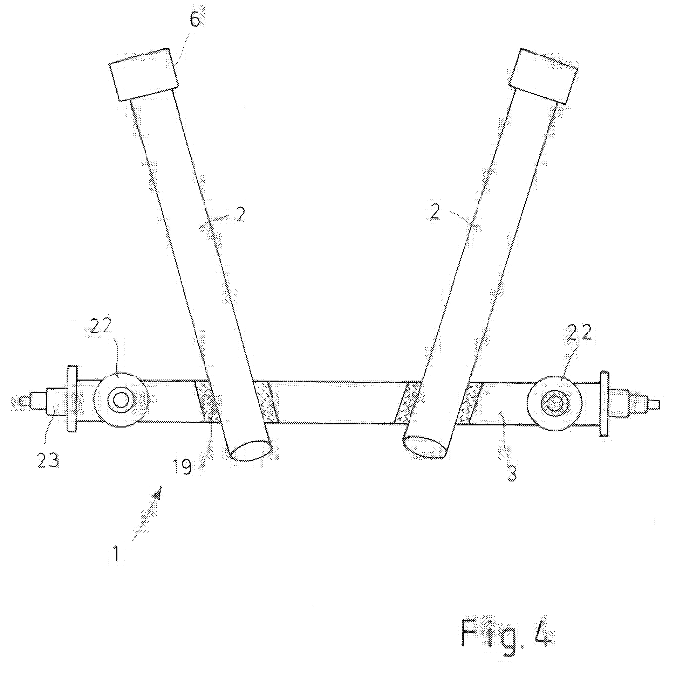

Figur 4 zeigt eine weitere Ausgestaltung einer Verbundlenkerachse 1. In dem in Figur 4 dargestellten Ausführungsbeispiel dient das Verbindungselement 3 zugleich als Radträger, wobei an seinen beiden gegenüberliegenden Enden 22 des Verbindungselementes 3 Radaufnahmevorrichtungen 23 vorgesehen sind.

Die Längslenker 2 sind winklig zueinander angeordnet, weswegen die jeweilige Aufnahmeöffnung 19 zur Aufnahme des Koppelelementes 4 in dem Verbindungselement 3 entsprechend ausgestaltet ist.

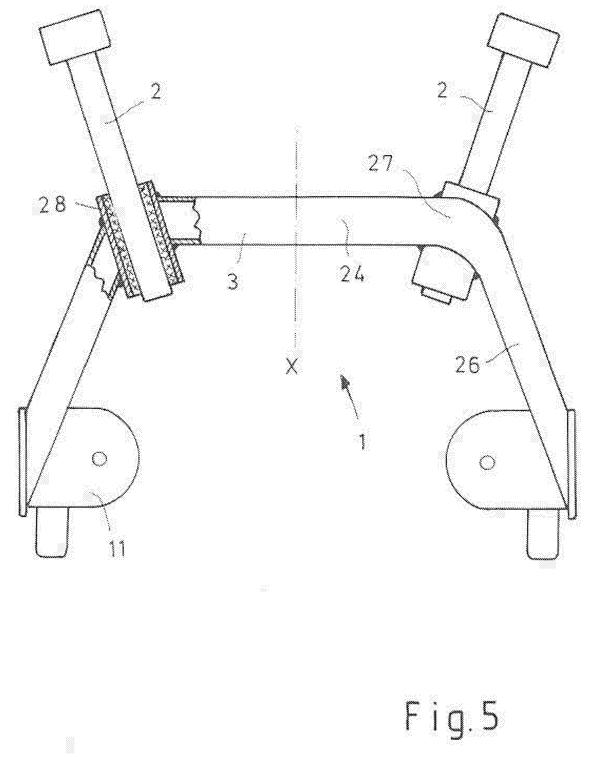

Die vorbeschriebene Verbundlenkerachse 1 gemäß den Ausführungsbeispielen nach den Figuren 1 bis 4 eignet sich insbesondere zum Einbau an einer nicht angetriebenen Achse. Sofern dies eine hintere Achse ist, ist es denkbar, daß im Bereich der Verbundlenkerachse 1 eine Reserveradmulde oder andere Mulden, bzw. Behälter in der Karosserie eingeformt sind, die einen komplikationslosen Einbau des Verbundlenkers behindern würde. Um dieses Einbauproblem zu umgehen, ist das Verbindungselement 3 gemäß einer weiteren Ausgestaltung nach Figur 5 im Wesentlichen U-förmig mit einem Basissteg 24 und U-Schenkeln 26 ausgestaltet. Die U-Schenkel 26 sind, bezogen auf eine Mittelachse X, in einem stumpfen Winkel von dem Basissteg 24 abgebogen. Somit wird erreicht, daß der Basissteg 24, bezogen auf die Radbefestigungsenden 5 des Verbindungselementes 3, in Richtung zu einer Fahrzeugfront verschoben ist, wodurch die Reserveradmulde umgangen wird. Die Längslenker 2 sind in den Aufnahmeöffnungen 19 aufgenommen, die im jeweiligen Biegebereich 27 des Verbindungselementes 3 angeordnet sind. Selbstverständlich ist zwischen dem Längslenker 2 und dem Verbindungselement 3 jeweils ein Koppelelement 4 vorgesehen, wobei das Koppelelement 4 formschlüssig mit dem Verbindungselement 3 verbunden, vorzugsweise verschweißt ist. Hierzu weist das Koppelelement 4 eine Hülse 28 auf in der die elastische Buchse, vorzugsweise als Gummibuchse angeordnet ist. Diese Ausgestaltung des Koppelelementes 4 kann selbstverständlich auch bei den Ausführungsbeispielen gemäß den Figuren 1 bis 4 vorgesehen sein.

Mittels der erfindungsgemäßen Ausgestaltung nach den Figuren 1 bis 5 wird eine Verbundlenkerachse 1 zur Verfügung gestellt, die erheblich an Gewicht reduziert ist, wobei eine genügende Torsionssteifigkeit erreicht ist. Die Gewichtsreduzierung wird zum einen dadurch erreicht, daß ein einfaches, starres, hohles Verbindungselement 3 eingesetzt wird. Die Torsionssteifigkeit wird durch das, bevorzugt als Gummibuchse ausgestaltete, Koppelelement 4 erreicht.

## Patentansprüche

1. Verbundlenkerachse mit zwei Längslenkern (2), denen ein Verbindungselement (3) zugeordnet ist,
**dadurch gekennzeichnet, daß**
das Verbindungselement (3) starr ausgestaltet ist, wobei das Verbindungselement (3) mit zumindest einem Längslenker (2) derart über ein Koppelelement (4) verbunden ist, daß eine Wankbewegung eines Kraftfahrzeuges von dem Koppelelement (4) aufgenommen wird.

2. Verbundlenkerachse nach Anspruche 1,
**dadurch gekennzeichnet, daß**
das Verbindungselement 3 als im Querschnitt gesehen hohles, rundes Rohr ausgestaltet ist.

3. Verbundlenkerachse nach Anspruch 1,
**dadurch gekennzeichnet, daß**
das Verbindungselement (3) als im Querschnitt gesehen hohles Vierkantprofil ausgestaltet ist.

4. Verbundlenkerachse nach einem der vorhergehenden Ansprüche,
**dadurch gekennzeichnet, daß**
das Koppelelement (4) als elastische Buchse ausgestaltet ist.

5. Verbundlenkerachse nach einem der vorhergehenden Ansprüche,
**dadurch gekennzeichnet, daß**
der Längslenker (2) eine Öffnung (9) zur Aufnahme des Koppelelementes (4) aufweist, wobei das Verbindungselement (3) in einer zentralen Öffnung (17) des Koppelelementes (4) aufgenommen ist.

6. Verbundlenkerachse nach einem der Ansprüche 1 bis 4,
**dadurch gekennzeichnet, daß**
das Verbindungselement (3) eine Aufnahmeöffnung (19) zur Aufnahme des Koppelelementes (4) aufweist, wobei der Längslenker (2) in einer zentralen Öffnung (19) des Koppelelementes (4) aufgenommen ist.
